# EUROPÄISCHE PATENTSCHRIFT

(11) **EP 0 610 748 B1**
(45) Veröffentlichungstag und Bekanntmachung des Hinweises auf die Patenterteilung: **20.12.1995**
(21) Anmeldenummer: 94101269.2
(22) Anmeldetag: 28.01.1994
(51) Int. Cl.: C01B 7/19

(54) **Verfahren zur Reinigung von Fluorwasserstoff**
Process for purifying hydrogen fluoride
Procédé de purification du fluorure d'hydrogène

(30) Priorität: 10.02.1993 DE 4303837
(43) Veröffentlichungstag der Anmeldung: 17.08.1994
(73) Patentinhaber: BAYER AG, 51368 Leverkusen (DE)
(72) Erfinder: Bulan, Andreas, Dipl.-Ing., D-40764 Langenfeld (DE); Weber, Rainer, Dr., D-51519 Odenthal (DE); Block, Hans-Dieter, Dr., D-51381 Leverkusen (DE); Moretto, Hans-Heinrich, Dr., D-51375 Leverkusen (DE)

(56) Entgegenhaltungen:
- EP-A- 0 480 254
- WO-A-91/13024
- US-A- 4 668 497
- JOURNAL OF THE ELECTROCHEMICAL SOCIETY Bd. 115, Nr. 10 , Oktober 1968 , MANCHESTER, NEW HAMPSHIRE US Seiten 1039 - 1042 J.A.DONOHUE, A.ZLETZ 'Pulsed electrolysis of wet hydrogen fluoride'
- ZEITSCHRIFT FUR ANORGANISCHE CHEMIE Bd. 463 , 1980 , LEIPZIG DD Seiten 91 - 95 D. HASS, P. WOLTER 'Über die Darstellung von OF2 durch Elektrolyse wasserhaltiger HF'

## Beschreibung

Die Erfindung betrifft ein Verfahren zur Reinigung von wasserfreiem, technischen Fluorwasserstoff.

Fluorwasserstoff fällt bei seiner technischen Herstellung (CaF₂ + H₂SO₄ → 2 HF + CaSO₄) im allgemeinen als wasserfreier Fluorwasserstoff an, der in Abhängigkeit vom Ausgangsmaterial (normalerweise Flußspat) einige Verunreinigungen sowie Wasser in geringen Mengen enthält.

Unter wasserfreiem Fluorwasserstoff wird also ein solcher Fluorwasserstoff verstanden, wie er mit einem üblichen technischen Verfahren erhalten wird und dessen Wassergehalt unter 5000 mg Wasser/kg Fluorwasserstoff liegt.

Die Verunreinigungen sind im wesentlichen Verbindungen der Elemente Arsen, Phosphor, Bor, Silicium und Schwefel.

Diese Verbindungen sind bei vielen Anwendungen unerwünscht, da sie störende Einflüsse haben.

Beim Einsatz von wäßrigen Lösungen des Fluorwasserstoffes bei der Herstellung von elektronischen Bauteilen wirken besonders die Verbindungen der Elemente Arsen, Phosphor, Silicium und Bor störend.

Bei Anwendungen, bei denen Fluorwasserstoff und ein Katalysator eingesetzt werden, wie z.B. bei der Herstellung von Fluor-Kohlenwasserstoffen, den Ersatzstoffen der Fluor-Chlor-Kohlenwasserstoffe, stören besonders die Verbindungen des Schwefels.

In US 3 166 379 werden Verbindungen der Elemente Arsen, Phosphor und Schwefel durch Zusatz von Chlor, Brom oder Jod und durch nachfolgende Destillation des Fluorwasserstoffes entfernt.

In US 4 668 497 werden Verbindungen der Elemente Bor, Silicium, Phosphor, Schwefel, Chor und Arsen durch Zusatz von elementarem Fluor mit nachfolgender Destillation des Fluorwasserstoffes entfernt.

In US 4 032 621 werden Verbindungen der Elemente Arsen und Schwefel durch Zugabe von Permanganaten ode Dichromaten und nachfolgender Destillation des Fluorwasserstoffes entfernt.

Nachteil der oben genannten Verfahren ist, daß durch den Zusatz von Oxidationsmitteln zum technischen Fluorwasserstoff, mit Ausnahme von Fluor, der Fluorwasserstoff erst einmal durch das zugesetzte Oxidationmittel zusätzlich verunreinigt wird. Im Anschluß an die Oxidation muß der Fluorwasserstoff also zur Abtrennung des Oxidationsmittels und der oxidierten Verunreinigungen destilliert werden.

Nachteil der Verwendung von Fluor ist dessen schwierige Handhabbarkeit.

In Abhängigkeit vom zugesetzten Oxidationsmittel muß vor der Destillation außerdem zur Vernichtung des überschüssigen Oxidationsmittels ein Reduktionsmittel zugesetzt werden (US 4 032 621), wobei durch den Zusatz des Reduktionsmittels weitere Verunreinigungen in den Fluorwasserstoff eingeschleppt werden.

In DE-A 4 031 967 und in WO 91/13024 wird der Fluorwasserstoff durch Elektrolyse an Nickel- oder Kohlenstoffelektroden gereinigt. Nachteil dieser Verfahren ist, daß sich Kohlenstoff-Elektroden als nicht besonders geeignet herausgestellt haben, da sie kurze Standzeiten bei der Elektrolyse in Fluorwasserstoff aufweisen. Der Nachteil des Einsatzes von Nickel-Elektroden ist, daß bei Einsatz dieser Elektroden eine starke Elektrodenkorrosion beobachtet wird. Hierdurch wird der zu reinigende Fluorwasserstoff mit Nickelverbindungen verunreinigt.

Aufgabe war es daher, ein Verfahren zur Reinigung von wasserfreiem, technischen Fluorwasserstoff zur Verfügung zu stellen, welches die oben genannten Nachteile nicht aufweist.

Diese Aufgabe konnte überraschenderweise durch das erfindungsgemäße Verfahren gelöst werden.

Gegenstand der Erfindung ist ein Verfahren zur Reinigung von technischem, wasserfreiem Fluorwasserstoff, welches dadurch gekennzeichnet ist, daß dem Fluorwasserstoff Sauerstoffdifluorid zugesetzt wird.

Das erfindungsgemäße Verfahren kann so durchgeführt werden, daß Sauerstoffdifluorid direkt in den zu reinigenden, technischen, wasserfreien Fluorwasserstoff eingeleitet wird.

Ebenso kann das Sauerstoffdifluorid durch Elektrolyse aus einer wäßrigen Lösung von Fluorwasserstoff an Nickel-Elektroden erst hergestellt und dann in den zu reinigenden Fluorwasserstoff eingeleitet werden (zur Herstellung von Sauerstoffdifluorid durch Elektrolyse (siehe HASS, WOLTER, Z. anorg. allg. Chem. 463, 91-95 (1980)). Die Herstellung von Sauerstoffdifluorid durch Elektrolyse kann z.B. in einer geteilten Zelle durchgeführt werden. Bei der Herstellung von Sauerstoffdifluorid mit Nickelelektroden aus einer wäßrigen Lösung von Fluorwasserstoff wird eine sehr geringe Elektrodenkorrosion beobachtet.

Sauerstoffdifluorid kann unverdünnt oder in Mischungen mit Inertgasen wie z.B. Stickstoff in den zu reinigenden Fluorwasserstoff eingeleitet werden.

Sauerstoffdifluorid kann auch gelöst in einer inerten Flüssigkeit dem zu reinigenden Fluorwasserstoff zugesetzt werden. Als inerte Flüssigkeit kann z.B. Fluorwasserstoff verwendet werden.

Zur Durchführung des erfindungsgemäßen Verfahrens ist es vorteilhaft, daß das Sauerstoffdifluorid mit dem zu reinigenden Fluorwasserstoff gut vermischt wird. Dies kann z.B. erreicht werden, indem das Sauerstoffdifluorid über eine Fritte in den zu reinigenden Fluorwasserstoff eingeleitet oder direkt in dem zu reinigenden Fluorwasserstoff erzeugt wird. Ebenso können Mischer benutzt werden, die in der Lage sind, Gase in Flüssigkeiten gut zu verteilen.

Der zu reinigende Fluorwasserstoff kann auch in der Gasphase bei Temperaturen von 20 bis 200°C mit Sauerstoff difluorid in Kontakt gebracht weden.

Ebenso ist die Durchführung des erfindungsgemäßen Verfahrens unter erhöhtem Druck in Druckbehältern möglich.

Der Vorteil des erfindungsgemäßen Verfahrens liegt darin, daß Sauerstoffdifluorid den zu reinigenden Fluorwasserstoff nicht zusätzlich verunreinigt.

Eine Destillation ist nicht erforderlich.

Ein weiterer Vorteil des erfindungsgemäßen Verfahrens ist, daß Sauerstoffdifluorid aufgrund seiner geringeren Reaktivität wesentlich einfacher zu handhaben ist als Fluor.

Das erfindungsgemäße Verfahren soll anhand der nachfolgenden Beispiele näher erläutert werden.

### Beispiele

Für die Versuche wurde Sauerstoffdifluorid durch Elektrolyse aus einer wäßrigen Lösung von Fluorwasserstoff an Nickel-Elektroden hergestellt.

Hierzu wurde eine Elektrolysezelle mit einem Volumen von 1500 ml mit einer 98 %igen Flußsäure gefüllt. An Nickel-Elektroden wurde dann durch Anlegen einer Spannung von etwa 5 V und bei einer Stromstärke von 1 A erzeugt. Das entstehende Sauerstoffdifluorid wurde mit einem Stickstoffstrom von 30 l/h in den zu reinigenden Fluorwasserstoff eingeleitet.

### Beispiel 1 (erfindungsgemäßes Verfahren)

Der zu reinigende Fluorwasserstoff enthielt Arsenverbindungen in einer Konzentration von 22 ppm Arsen. In ein Gefäß wurden 650 ml dieses Fluorwasserstoffs eingefüllt. 27 Stunden lang wurde ein Gasstrom aus Stickstoff und Sauerstoffdifluorid in den zu reinigenden Fluorwasserstoff eingeleitet. Der Gasstrom wurde wie oben beschrieben hergestellt.

Nach dem Versuch lag der Arsengehalt bei 4,95 ppm. Es wurden 77,5 % des Arsens entfernt.

### Beispiel 2 (Einfluß von Sauerstoff und Ozon)

Bei der Elektrolyse einer wäßrigen Lösung von Fluorwasserstoff entsteht neben Sauerstoffdifluorid auch Sauerstoff und Ozon an der Anode. Um den Einfluß von Sauerstoff und Ozon auf die Reinigung von technischem, wasserfreiem Fluorwasserstoff zu untersuchen, wurde ein Gemisch aus Sauerstoff und Ozon in den zu reinigenden Fluorwasserstoff eingeblasen. In einem Reaktionsgefäß wurden 650 ml dieses Fluorwasserstoffs mit einem Arsengehalt von 35 mg Arsen/kg Fluorwasserstoff vorgelegt und innerhalb von 3 Stunden ein Gemisch aus 15 g Ozon und 400 g Sauerstoff eingeblasen. Der Inhalt des Reaktionsgefäßes wurde anschließend untersucht. Der Gehalt an Arsen war unverändert.

## Patentansprüche

1. Verfahren zur Reinigung von technischen, wasserfreiem Fluorwasserstoff, dadurch gekennzeichnet, daß dem Fluorwasserstoff Sauerstoffdifluorid zugesetzt wird.

2. Verfahren gemäß Anspruch 1, dadurch gekennzeichnet, daß Sauerstoffdifluorid unverdünnt oder in Abmischung mit Inertgasen oder inerten Flüssigkeiten zugesetzt wird.

3. Verfahren gemäß Anspruch 1 oder 2, dadurch gekennzeichnet, daß die Reinigung in der Gasphase bei Temperaturen zwischen 20 und 200°C erfolgt.

4. Verfahren gemäß einem der Ansprüche 1 bis 3, dadurch gekennzeichnet, daß die Reinigung unter erhöhtem Druck erfolgt.

## Claims

1. Process for purifying industrial anhydrous hydrogen fluoride, characterised in that oxygen difluoride is added to the hydrogen fluoride.

2. Process according to Claim 1, characterised in that oxygen difluoride is added undiluted or in mixture with inert gases or inert liquids.

3. Process according to Claim 1 or Claim 2, characterised in that purification takes place in the gas phase at temperatures of between 20 and 200 °C.

4. Process according to one of Claims 1 to 3, characterised in that purification takes place at elevated pressure.

## Revendications

1. Procédé pour purifier du fluorure d'hydrogène industriel anhydre, caractérisé en ce que l'on ajoute du difluorure d'oxygène au fluorure d'hydrogène.

2. Procédé selon revendication 1, caractérisé en ce que le difluorure d'oxygène est ajouté tel quel ou en mélange avec des gaz inertes ou des liquides inertes.

3. Procédé selon la revendication 1 ou 2, caractérisé en ce que la purification est réalisée en phase gazeuse à des températures de 20 à 200°C.

4. Procédé selon une des revendications 1 à 3, caractérisé en ce que la purification est réalisée sous pression.
